# EUROPÄISCHE PATENTSCHRIFT

(11) **EP 1 342 538 B1**
(45) Veröffentlichungstag und Bekanntmachung des Hinweises auf die Patenterteilung: **07.12.2005**
(21) Anmeldenummer: 02005191.8
(22) Anmeldetag: 08.03.2002
(51) Int. Cl.: B25B 27/00, B60J 10/02

(54) **Verfahren und Werkzeug zum Aufkleben eines Dichtungsprofils auf den Rand einer Glasscheibe**
Method and apparatus for bonding a gasket on the edge of a glass pane
Procédé et appareil pour la fixation d'un joint d'étanchéité sur le bord d'une plaque de verre

(43) Veröffentlichungstag der Anmeldung: 10.09.2003
(73) Patentinhaber: PMA- Tools Division AG, 47877 Willich (DE)
(72) Erfinder: Wilhelmstroop, Peter, 33617 Bielefeld (DE); Pahde, Achim, 33790 Halle/Westfalen (DE)
(74) Vertreter: Wiebusch, Manfred

(56) Entgegenhaltungen:
- EP-A- 0 293 302
- DE-A- 19 744 275
- DE-U- 8 600 068
- US-A- 4 211 598
- US-A- 5 045 146
- US-A- 6 115 897

## Beschreibung

Die Erfindung betrifft ein Verfahren zum Aufkleben eines Dichtungsprofils auf den Rand einer Glasscheibe, bei dem ein Strang des Dichtungsprofils in eine an das Profil angepaßte Führungskontur eingelegt wird, die in einer drehbaren, in einem Werkzeug gelagerten Rolle ausgebildet ist, eine Anlagefläche des Werkzeugs gegen den Rand der Glasscheibe angelegt wird und das Dichtungsprofil mit einer Klebfläche auf die in Randnähe gelegene Oberfläche der Glasscheibe aufgedrückt und mit der Rolle an die Glasscheibe angerollt wird, indem das Werkzeug am Rand der Glasscheibe entlang geführt wird, sowie ein Werkzeug zur Durchführung dieses Verfahrens.

Fensterglasscheiben für Kraftfahrzeuge weisen häufig am Rand ein Dichtungsprofil aus einem gummiartigen Material auf, das über den Rand der Glasscheibe übersteht und an einem Rahmen abdichtet, in den die Glasscheibe eingefaßt wird. Es ist ein Spritzgießverfahren bekannt, mit dem das Dichtungsprofil unmittelbar an den Rand der Glasscheibe angespritzt wird. Gelegentlich, beispielsweise bei Reparaturarbeiten, ist es jedoch erwünscht, ein Dichtungsprofil in der Form eines vorgefertigten endlosen Stranges an den Rand der Glasscheibe anzukleben. Dazu wird die Klebfläche auf der Gleisscheibe und/oder am Dichtungsprofil mit einer Klebeschicht aus einem gut haftenden Kleber versehen, und die Klebflächen werden dann mit einem gewissen Druck gegeneinander angedrückt. Bei dem als Endlosmaterial angelieferten Strang kann die Klebeschicht bereits an der Klebfläche angebracht und durch eine Schutzfolie abgedeckt sein, die dann unmittelbar vor dem Aufkleben auf die Glasscheibe abgezogen wird.

Ein Verfahren und ein Werkzeug der eingangs genannten Art sind aus US-A-5 045 146 bekannt.

Es erweist sich jedoch als schwierig, den Strang so präzise auf der Glasscheibe zu positionieren, daß das Dichtungsprofil einen gleichbleibenden Überstand gegenüber dem Rand der Glasscheibe aufweist, zumal es die Haftungseigenschaften des Klebers zumeist nicht zulassen, die Position des Stranges nachträglich zu korrigieren.

Aufgabe der Erfindung ist es deshalb, ein Verfahren und ein Werkzeug anzugeben, das das präzise Aufkleben des Dichtungsprofilsmit einem definierten Überstand auf die Glasscheibe erleichtert.

Diese Aufgabe wird erfingdungsgemäß mit den in den Ansprüchen 1 und 4 angegebenen Merkmalen gelöst

Die an die Querschnittsform des Dichtungsprofils angepaßte Führungskontur des Werkzeugs ermöglicht es, den Strang gleichmäßig an die Oberfläche der Glasscheibe anzudrücken. Da sich die Anlagefläche des Werkzeugs am Rand der Glasscheibe abstützt, läßt sich der Strang beim Aufstreichen auf den Rand der Glasscheibe so präzise positionieren, daß sich ein stets gleichbleibender, präzise vorgebbarer Überstand des Dichtungsprofils über den Rand der Glasscheibe ergibt.

Da das Werkzeug beispielsweise von Hand am Rand der Glasscheibe entlang geführt wird, läßt sich das Verfahren universell bei Glasscheiben mit in weitem Bereich variierenden Umrißformen einsetzen.

Der Strang wird mit Hilfe einer in das Werkzeug integrierten Rolle, deren Umfangsfläche an das Profil des Stranges angepaßt ist, gegen die Oberfläche der Glasscheibe angerollt. Da auf diese Weise der Reibungswiderstand zwischen dem Strang und dem Werkzeug minimiert wird, läßt sich eine übermäßige Dehnung des elastischen Strangmaterials vermeiden, und dennoch können die Klebflächen mit hoher Anpreßkraft gegeneinandergedrückt werden.

Vorteilhafte Ausgestaltungen der Erfindung ergeben sich aus den Unteransprüchen.

Wenn an dem Strang des Dichtungsprofils bereits eine Klebeschicht vorgesehen ist, die durch eine Schutzfolie abgedeckt ist, so wird die Schutzfolie vorzugsweise während des Aufstreichens nach und nach abgezogen, so daß sie sich erst unmittelbar vor dem Arbeitspunkt des Werkzeugs von der Klebfläche des Stranges löst. So läßt sich verhindern, daß der Strang vorzeitig an unerwünschten Stellen auf der Glasscheibe oder an anderen Gegenständen anklebt.

Der Randüberstand des Dichtungsprofils läßt sich präzise einstellen, indem Distanzstücke unterschiedlicher Dicke auf der Anlagefläche des Werkzeugs befestigt werden.

Durch Auswechseln der Rolle läßt sich das Werkzeug an unterschiedliche Profilformen anpassen.

In der Anlagefläche ist vorzugsweise mindestens ein Schraubloch vorgesehen, so daß Distanzkörper unterschiedlicher Dicke mit Schrauben, deren Köpfe im Distanzkörper versenkt sind, an die Anlagefläche angeschraubt werden können. Auf diese Weise läßt sich die Lage der Führungskontur relativ zum Rand der Glasscheibe - und damit der Überstand des Dichtungsprofils über den Rand der Glasscheibe - präzise vorgeben.

Im folgenden wird ein Ausführungsbeispiel der Erfindung anhand der Zeichnung näher erläutert.

Es zeigen:
- Fig. 1: einen Längsschnitt durch ein Werkzeug;
- Fig. 2: einen Schnitt längs der Linie II-II in Figur 1; und
- Fig. 3: eine perspektivische Ansicht des Werkzeugs und eines Randbereichs einer Glasscheibe während der Durchführung des erfindungsgemäßen Verfahrens.

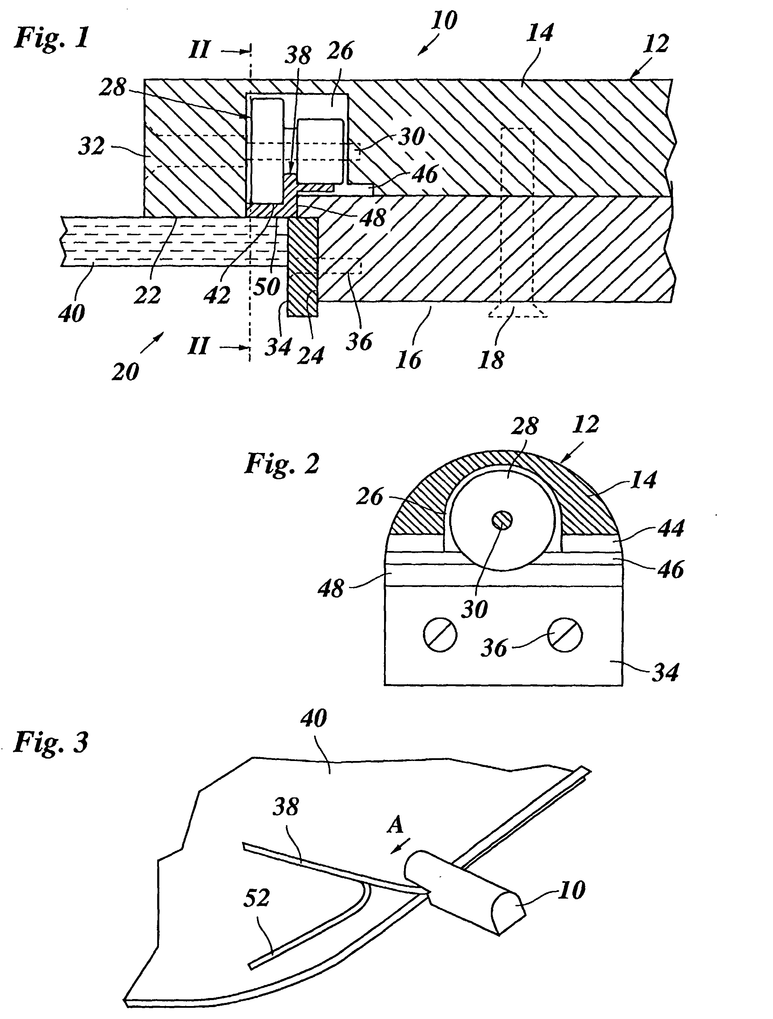

Das in Figur 1 gezeigte Werkzeug 10 weist einen Grundkörper in der Form eines länglichen Stabes 12 auf, der gemäß Figur 2 im gezeigten Beispiel einen annähemd U-förmigen Querschnitt besitzt und in einer Längsmittelebene in eine obere Hälfte 14 und eine untere Hälfte 16 geteilt ist. Die beiden Hälften 14, 16 sind mit Schrauben 18 lösbar zusammengehalten. Am vorderen Ende, links in Figur 1, weist der Stab 12 eine L-förmige Aussparung 20 auf, die durch eine parallel zur Achse und zur Teilungsebene des Stabes 12 verlaufende Wand 22 und eine rechtwinklig dazu verlaufende Anlagefläche 24 begrenzt wird.

In die obere Hälfte 14 des Stabes 12 ist eine Kammer 26 eingelassen, die zur Wand 22 der Aussparung 20 hin offen ist. Die Kammer 26 nimmt eine Rolle 28 auf, die auf einer parallel zur Längsachse des Stabes 12 verlaufenden Achse 30 drehbar gelagert ist. Die Achse 30 wird durch eine Verlängerung einer Schraube 32 gebildet, die von der Stirnseite her in die obere Hälfte 14 des Stabes 12 eingeschraubt ist, so daß sich die Rolle 28 leicht auswechseln läßt.

Im gezeigten Beispiel ist an die Anlagefläche 24 ein plattenförmiges Distanzstück 34 mit Schrauben 36 angeschraubt, so daß sich die Tiefe der Aussparung 20 etwas verringert. Die Köpfe der Schrauben 36 sind in dem Distanzstück 34 versenkt, so daß auch das Distanzstück 34 wieder eine glatte Anlagefläche bildet.

Das Werkzeug 10 dient dazu, ein Dichtungsprofil 38 aus gummielastischem Material auf den Rand einer Glasscheibe 40 aufzukleben. Die Umfangsfläche der Rolle 28 ist an die Querschnittsform des Dichtungsprofils 38 angepaßt und bildet somit eine Führungskontur 42 für das Dichtungsprofil. In der oberen Hälfte 14 des Stabes 12 ist beiderseits der Kammer 26 eine Nut 44 ausgebildet (Figur 2), in der das Dichtungsprofil 38 in Querrichtung durchgehend aufgenommen werden kann. Diese Nut 44 weist einen vertieften Teil 46 auf, der einen mehr oder weniger weit über den Rand der Glasscheibe 40 vorspringenden Schenkel des Dichtungsprofils 38 aufnehmen kann. Die untere Hälfte 16 des Stabes 12 weist eine über die Anlagefläche 24 hinaus vorspringende Leiste 48 auf, die mit der Wand 22 der Aussparung 20 bündig ist und dem Dichtungsprofil 38 Führung gibt.

Das Dichtungsprofil 38 weist an der Unterseite eine beleimte Klebfläche 50 auf, mit der es auf die obere Oberfläche der Glasscheibe 40 aufgeklebt wird. Der Au-ßendurchmesser der Rolle 28 ist so gewählt, daß zumindest der die Klebfläche 50 bildende Teil des Dichtungsprofils 38 leicht komprimiert und fest gegen die Glasscheibe 40 angedrückt wird, wenn die Wand 22 auf der Oberseite der Glasscheibe 40 aufliegt.

Um das Dichtungsprofil 38 auf die Gleisscheibe 40 aufzurollen, wird das Dichtungsprofil zunächst in die Nut 44 des Stabes 12 und in die Führungskontur 42 der Rolle 28 eingelegt oder eingefädelt. Anschließend wird das Werkzeug 10 so an die Glasscheibe 40 angesetzt, daß die Wand 22 der Aussparung 20 auf der Glasscheibe aufliegt und der Rand der Glasscheibe sich über das Distanzstück 34 an der Anlagefläche 24 abstützt. Auf diese Weise wird die Position des Dichtungsprofils 38 in Bezug auf die Glasscheibe 40 präzise vorgegeben. Das Werkzeug 10 wird dann am Rand der Glasscheibe 40 entlangbewegt, wie durch einen Pfeil A in Figur 3 symbolisiert wird, so daß das Dichtungsprofil 38 auf den Rand der Glasscheibe aufgerollt wird. Wie weiterhin in Figur 3 zu erkennen ist, ist die Klebfläche 50 des Dichtungsprofils 38 zunächst mit einer Schutzfolie 52 abgedeckt, die unmittelbar vor dem Aufrollen des Dichtungsprofils abgezogen wird.

Wenn das Dichtungsprofil 38 weniger weit über den Rand der Glasplatte 40 überstehen soll, wird die Distanzplatte 34 durch eine entsprechend dünnere Distanzplatte ersetzt oder ganz fortgelassen, so daß das Dichtungsprofil in einer weiter nach innen versetzten Position auf die Glasscheibe 40 aufgeklebt wird. Wahlweise kann auch ein anderes Dichtungsprofil verwendet werden, bei dem der überstehende Schenkel eine größere Breite hat. Die Nut 46 bietet Platz zur Aufnahme dieses Schenkels.

Im gezeigten Beispiel hat das Dichtungsprofil 38 auf der der Klebfläche 50 entgegengesetzten Seite einen rippenartigen Vorsprung, der in eine Nut der Rolle 28 eingreift. Die an diese Nut angrenzenden Abschnitte der Rolle 28 liegen beiderseits der Rippe an dem Dichtungsprofil 38 an, so daß eine saubere Führung des Dichtungsprofils erreicht wird. Die Dicke der Leiste 48 ist aber vorzugsweise so gewählt, daß der zwischen dieser Leiste und der Rolle 38 liegende Schenkel des Dichtungsprofils etwas Spiel hat, so daß er die Bewegung des Werkzeugs nichts bremst.

Der zweiteilige Aufbau des Stabes 12 erleichtert das Auswechseln der Rolle 28 sowie die Herstellung der Kammer 26. Die beiden Hälften 14, 16 des Stabes 12 können beispielsweise im Spritzgießverfahren aus Kunststoff hergestellt werden.

## Patentansprüche

1. Verfahren zum Aufkleben eines Dichtungsprofils (38) auf den Rand einer Glasscheibe (40), bei dem
- ein Strang des Dichtungsprofils (38) in eine an das Profil angepaßte Führungskontur (42) eingelegt wird, die in einer drehbaren, in einem Werkzeug (10) gelagerten Rolle (28) ausgebildet ist,
- eine Anlagefläche (24) des Werkzeugs (10) gegen den Rand der Glasscheibe (40) angelegt wird und
- das Dichtungsprofil (38) mit einer Klebfläche (50) auf die in Randnähe gelegene Oberfläche der Glasscheibe (40) aufgedrückt und mit der Rolle (28) an die Glasscheibe (40) angerollt wird, indem das Werkzeug (10) am Rand der Glasscheibe (40) entlang geführt wird,
- **dadurch gekennzeichnet daß** mit Hilfe der Führungskontur (42) ein Überstand des Dichtungsprofils über den Rand der Glasscheibe (40) bestimmt wird und der Rand der Glasscheibe (40) unterhalb des Überstands an der Anlagefläche (24) des Werkzeugs (10) abgestützt wird.

2. Verfahren nach Anspruch 1, **dadurch gekennzeichnet, daß** eine Schutzfolie (52), die die Klebfläche (50) des Dichtungsprofils (38) abdeckt, während des Aufstreichens des Dichtungsprofils auf die Glasscheibe (40) unmittelbar vor dem Werkzeug (10) abgezogen wird.

3. Verfahren nach einem der vorstehenden Ansprüche, **dadurch gekennzeichnet, daß** der Überstand des Dichtungsprofils (38) über den Rand der Glasscheibe (40) bestimmt wird, indem ein Distanzstück (34) geeigneter Dicke an der Anlagefläche (24) befestigt wird, so daß sich der Rand der Glasscheibe (40) über das Distanzstück (34) an der Anlagefläche (24) abstützt.

4. Werkzeug zum Aufkleben eines Dichtungsprofils (38) auf den Rand einer Glasscheibe (40), **gekennzeichnet durch** einen Stab (12), der an einem Ende eine Anlagefläche (24) für den Rand der Glasscheibe (40), eine rechtwinklig zu der Anlagefläche (24) orientierte Wand (22), die zusammen mit der Anlagefläche (24) eine L-förmige Aussparung (20) des Stabes bildet, sowie eine Nut (44, 46) zur Aufnahme eines über den Rand der Glasscheibe (10) überstehenden Teils des Dichtungsprofils (38) aufweist, und **durch** eine Rolle (28), die um eine in Längsrichtung des Stabes (12) verlaufende Achse (30) drehbar in dem Stab gelagert ist und deren Umfangsfläche eine in die Wand (22) eingelassene Führungskontur (42) für das Dichtungsprofil (28) bildet.

5. Werkzeug nach den Anspruch 4, **dadurch gekennzeichnet, daß** die Rolle (28) auswechselbar in einer Kammer (26) untergebracht ist, die zu der Aussparung (20) offen ist.

6. Werkzeug nach einem der Anspruch 4 oder 5, **dadurch gekennzeichnet, daß** der Stab (12) in Längsrichtung in zwei lösbar miteinander verbundene Hälften (14, 16) geteilt ist, von denen eine (14) die Führungskontur (42) trägt und die andere (16) die Anlagefläche (24) bildet.

7. Werkzeug nach einem der Ansprüche 4 bis 6, **dadurch gekennzeichnet, daß** plattenförmige Distanzstücke (34) unterschiedlicher Dicke lösbar auf der Anlagefläche (24) zu befestigen sind.

## Claims

1. Method for bonding a gasket (38) to the edge of a glass pane (40), in which
- a strand of the gasket (38) is placed in a guide contour (42) which is adapted to the gasket and which is formed in a rotatable roller (28) mounted in a tool (10),
- a contact face (24) of the tool (10) is applied to the edge of the glass pane (40) and
- the gasket (38) is pressed with a bonding face (50) onto the surface of the glass pane (40) which is in the vicinity of the edge and rolled with the roller (28) onto the glass pane (40) by guiding the tool (10) along the edge of the glass pane (40),
- **characterised in that** a projection of the gasket beyond the edge of the glass pane (40) is determined by means of the guide contour (42), and the edge of the glass pane (40) is supported below the projection at the contact face (24) of the tool (10).

2. Method according to Claim 1, **characterised in that** a protective film (52), which covers the bonding face (50) of the gasket (38), is removed while applying the gasket to the glass pane (40) immediately before the tool (10).

3. Method according to any one of the preceding Claims, **characterised in that** the projection of the gasket (38) beyond the edge of the glass pane (40) is determined by fastening a spacer (34) of a suitable thickness to the contact face (24), so that the edge of the glass pane (40) is supported via the spacer (34) at the contact face (24).

4. Tool for bonding a gasket (38) to the edge of a glass pane (40), **characterised by** a bar (12) which comprises at one end a contact face (24) for the edge of the glass pane (40), a wall (22) which is oriented at a right angle to the contact face (24) and which, together with the contact face (24), forms an L-shaped recess (20) of the bar, and a groove (44, 46) for holding a part of the gasket (38) which projects beyond the edge of the glass pane (10), and by a roller (28) which is mounted in the bar so as to be rotatable about a shaft (30) extending in the longitudinal direction of the bar (12) and the circumferential face of which forms a guide contour (42), which is let into the wall (22), for the gasket (38).

5. Tool according to Claim 4, **characterised in that** the roller (28) is accommodated in a replaceable manner in a chamber (26) which is open towards the recess (20).

6. Tool according to either Claim 4 or 5, **characterised in that** the bar (12) is divided in the longitudinal direction into two halves (14, 16) which are connected together in a detachable manner and one (14) of which bears the guide contour (42) and the other (16) of which forms the contact face (24).

7. Tool according to any one of Claims 4 to 6, **characterised in that** plate-shaped spacers (34) of differing thickness are to be fastened to the contact face (24) in a detachable manner.

## Revendications

1. Procédé pour coller un joint profilé d'étanchéité (38) sur le bord d'une vitre (40), dans lequel
- un cordon du joint profilé d'étanchéité (38) est placé dans un contour de guidage (42) adapté au joint profilé, lequel contour est réalisé dans une roulette (28) montée tournante dans un outil (10),
- une surface de contact (24) de l'outil (10) est appliquée contre le bord de la vitre (40), et
- on presse le joint profilé d'étanchéité (38) avec une surface adhésive (50) sur la surface de la vitre (40) située à proximité du bord, et on fait rouler la roulette (28) sur la vitre (40) en guidant l'outil (10) le long du bord de la vitre (40),
**caractérisé en ce qu'**à l'aide du contour de guidage (42) on détermine de combien le joint profilé d'étanchéité déborde du bord de la vitre (40), et le bord de la vitre (40) est soutenu au-dessous du débordement, contre la surface de contact (24) de l'outil (10).

2. Procédé selon la revendication 1, **caractérisé en ce qu'**une feuille de protection (52), qui recouvre la surface adhésive (50) du joint profilé d'étanchéité (38), est retirée juste devant l'outil (10) pendant que l'on applique le joint profilé d'étanchéité sur la vitre (40).

3. Procédé selon l'une des revendications précédentes, **caractérisé en ce que** le débordement du joint profilé d'étanchéité (8) par rapport au bord de la vitre (40) est déterminé par fixation d'un écarteur (34) d'épaisseur convenable sur la surface de contact (24), ce qui fait que le bord de la vitre (40) prend appui par l'intermédiaire de l'écarteur (34) sur la surface de contact (24).

4. Outil pour coller un profilé d'étanchéité (38) sur le bord d'une vitre (40), **caractérisé par** une barre (12) qui comporte à une extrémité une surface de contact (24) pour le bord de la vitre (40), une paroi (22) orientée perpendiculairement à la surface de contact (24) laquelle forme avec la surface de contact (24) une découpe (20) en L, ainsi qu'une rainure (44, 46) pour recevoir une partie du joint profilé d'étanchéité (38), dépassant du bord de la vitre (10), et par une roulette (28) qui est montée dans la barre de manière à pouvoir tourner autour d'un axe (30) s'étendant dans la direction longitudinale de la barre (12), et dont la surface périphérique forme un contour de guidage (42), encastré dans la paroi (22), pour le joint profilé d'étanchéité (28).

5. Outil selon la revendication 4, **caractérisé en ce que** la roulette (28) est logée échangeable dans une chambre (26) qui est ouverte vers la découpe (20).

6. Outil selon l'une des revendications 4 ou 5, **caractérisé en ce que** la barre (12) est divisée dans la direction longitudinale en deux moitiés (14, 16) reliées entre elles de manière amovible, dont une (14) porte le contour de guidage (42) et l'autre (16) forme la surface de contact (24).

7. Outil selon l'une des revendications 4 à 6, **caractérisé en ce que** des écarteurs (34) en forme de plaque d'épaisseurs différentes doivent être fixés de manière amovible sur la surface de contact (24).
